# EUROPEAN PATENT APPLICATION

(11) **EP 0 726 675 A1**
(43) Date of publication of application: **14.08.1996**
(21) Application number: 96101265.5
(22) Date of filing: 30.01.1996
(51) Int. Cl.: H04N 7/088

(54) **Decoder for a subscriber station in an interactive television system**

(30) Priority: 09.02.1995 IT MI950226
(71) Applicant: Italtel - A Stet and Siemens Company S.p.A., I-20149 Milano (IT)
(72) Inventor: Pezzotta, Augusto, I-24060 Gorlago 5BG (IT); Bertolini, Angelo, I-20010 Cornaredo (MI) (IT); Mugnano, Maria-Angela, I-20123 Milano (IT)
(74) Representative: Giustini, Delio

(57) **Abstract**

Decoder for the subscriber station in an interactive television system comprising:
- a television interface module (40) suitable to catch interactive data transmitted by a television station and to apply to the subscriber television receiver (18) signals and visualizations obtained from this;
- a peripheral management module (50) suitable to manage a plurality of peripheral units (DSP, I_REC, Printer, CR) and to dialogue with the television interface module (40);
- a communication module (80) suitable to exchange data with a subscriber telephone line (LT);
- a re-configuration module (70) suitable to receive a support (CARD) on which hardware and/or software type appliances are installed;
- switching means (SW) suitable to connect to said modules (40, 50, 80, 70) the above-mentioned hardware and/or software appliances present on said re-shaping module (70);
- a process controller (PC) suitable to detect the occurred installation of said support (CARD) in the re-shaping module (70) and to activate said switching means (SW).

The re-configuration module makes it possible to easily expand the basic performances of the decoder without requiring the intervention of specialized technicians.

## Description

### Field of the Invention

The present invention relates to an interactive television system which makes it possible for the domestic/residential subscriber to participate actively in television programmes such as quiz, commercials, polls, sports events, tele-shopping, etc.

In particular the present invention relates to a decoder to be installed in the so-called subscriber station. This subscriber station, in the simplest case, is set up by a single television set connected to an antenna, but in a more general way, it comprises further auxiliary audio and video equipment, such as video recorders, other tv sets, CD players, etc.

In the previous international patent application no. WO 95/31068 in the name of the same applicant, an interactive television system is described which includes a television station able to broadcast a television signal and interactivity data during the frame return of the television signal also labelled Vertical Blanking Interval. In such a system each subscriber station comprises a television receiver, a decoder linked to it and a device for direct and automatic access to the telephone line connected in radio frequency to the decoder.

### Object of the Invention

One object of the present invention is to realize an improved decoder for an interactive television subscriber station suitable to support different types of links to the telephone line access device, and moreover suitable to acquire from outside in a simple and economic way updating and/or re-configuration data, as well as to store data related to the interactive activity on an external support.

A special object of the present invention is that to realize a decoder having a predetermined basic configuration which cost is particularly reasonable and which is structured in a way that the above-mentioned basic performances may be increased for the implementation of particular interactive events, without requiring the intervention of specialized technicians.

### Disclosure of the Invention

The invention achieves these aims through an equipment with the features exposed in claim 1. Further advantageous features are subject of the appended claims.

The equipment according to the invention is especially adapted to the use in the system, according to the above-mentioned international patent application, although its use is not limited to this particular interactive television system. The equipment of the invention, in fact, can be generally applied in interactive television systems which foresee interactivity data transmission during the vertical blanking interval and which are linked through telephone lines to service centres or equivalent structures suitable to process the data arriving from the subscriber.

### Bried Description of the Drawings

The features of the present invention which are believed to be novel are set forth with particularity in the appended claims. The invention, together with further objects and advantages thereof, may be understood with reference to the following description, taken in conjunction with the accompanying drawings and in which:
Fig. 1 shows schematically a subscriber station of an interactive television system;
Fig. 2 shows in details the structure of the decoder or set-top 30 of figure 1 being part of the subscriber terminal equipment according to the invention;
Fig. 3 shows the external aspect of a remote control as part of the subscriber terminal equipment according to the invention;
Fig. 4 shows more in details the structure of the remote control of figure 3.

### Detailed Description of a Preferred Embodiment

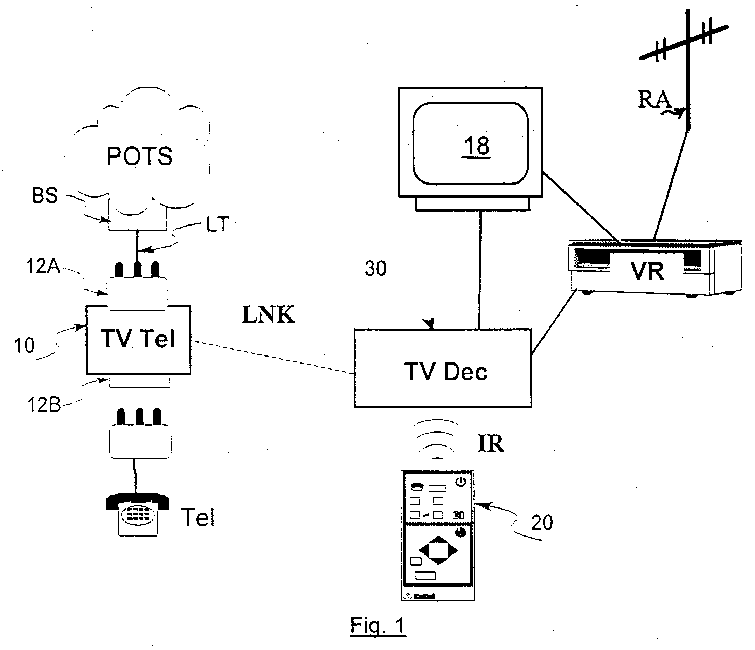

Fig. 1 illustrates schematically a subscriber station of an interactive television system which includes the invention.

It comprises a television set 18 connected to a television antenna RA by means of a video recording equipment VR. If the station does not comprise a video recorder, the antenna RA is directly connected in the known way to the television receiver 18.

The equipment according to the invention foresees a decoder device (or TV Dec) 30 which is connected by means of a cable to the SCART plug of the TV set 18 and, if there is, a video recorder VR with another cable which will be put into the SCART plug of the latter one.

The subscriber station comprises moreover a remote control 20 which works on the decoder 30, and a device 10 for the access to the telephone line LT (and from here to the public network POTS) indicated as TV Tel. The link LNK between the decoder 30 and the access device 10 may be realized in different ways. For example it may be a radio frequency link, as provided for in the above-mentioned patent application, or it may occur by means of infrared, ultrasound rays, waves or possibly by cable. The access device is moreover of the self-shaping type, i.e. it does not require any modification of the telephone or electric installation, and it is incorporated in a container with a tripolar plug 12A of the male type on one side and a female plug 12B on the other side, to be put between the plug of the telephone set Tel and the tripolar wall jack of the telephone network. The access device preferably drains the power from the telephone line.

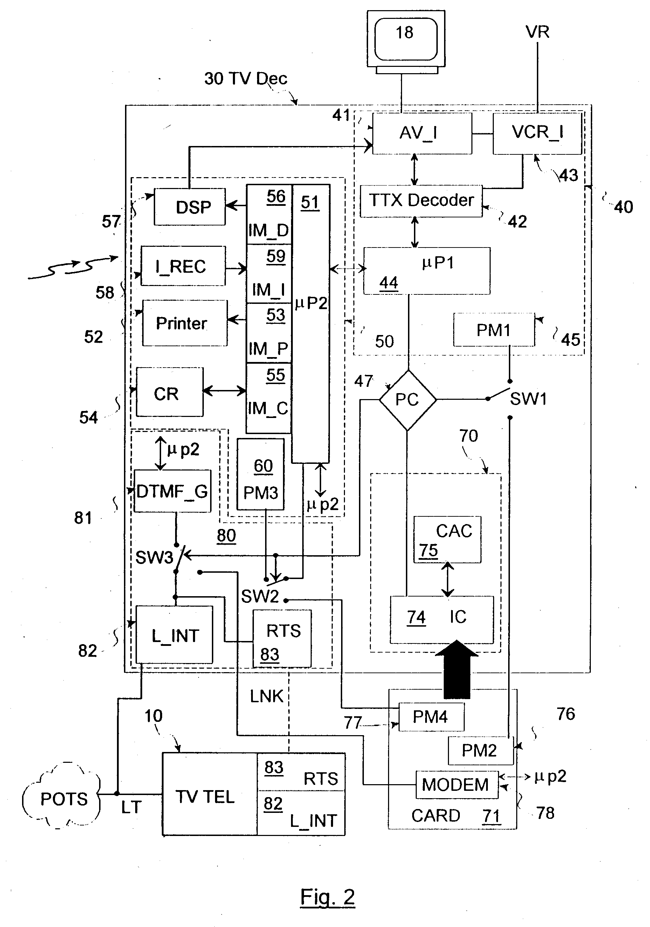

With reference to Fig. 2 we will now describe in details the TV DEC 30 of figure 1 which is of the type known as set-top and suitable to receive the interactivity data associated to the television signal through the television interface module 40.

This latter one is provided with an interface 41 of the input/output audio/video signal (AudioVideo_Interface) (Euro-Scart) as well as with a teletext decoder TTX Decoder 42. The television interface module 40 is therefore suitable to receive data transmitted by a television carrier provided with a TTX transmission system, i.e. the one which uses for the data transmission the intervals associated to the frame returns (standardized system also known as VBI - Vertical Blanking Interval).

Without departing from the spirit of the invention it is therefore possible to equip the set-top 30 with decoders different from the Teletext Decoder in case the transmission system of the data associated to the television signal used by the television station will be of another standard, as for example the french one.

The input/output system TTX Decoder 42 of the TTX signal will be of the advanced type allowing to manage texts, icons, fixed and moving graphics.

The television interface 40 may possibly also comprise an interface towards the video recorder VCR_I 43.

To the TTX decoder 42, a first microcomputer µP1 44 is connected to which a first programme memory PM1 45 turns out to be connected, preferably through a process controller PC 47 which function will become clearer by the following.

The microcomputer is suitable to recognize the received messages and to make appear, with the help of the Decoder TTX 42 which acts as text/graphic processor, windows overlaid on the TV screen of the receiver 18, which will guide the subscriber for the participation in interactive events; the transmission of the windows to the subscriber's television set happens through the same audio/video signal interface 41.

The decoder 30 comprises moreover a peripheral interface module 50 operated by a second microcomputer µP2 51 which is connected through a serial interface to the microcomputer µP1. All or parts of the functions carried out by the microcomputer µP2 51 can obviously be integrated in the microcomputer µP1 44, and consequently the microcomputer µP2 51 may be of reduced dimension or turn out to be absent.
Such peripheral interface module comprises:
1) an integrated mini-printer 52 controlled by the memory IM_P 53; the addition of a standard interface for a printer, or the replacement of the mini-printer by the standard interface for a printer may possibly enable the connection of a traditional external printer to the microcomputer µP2;
2) an integrated smart card reader CR 54 and provided with microprocessor and own memory IM_C 55, making it possible to interface cards of the "chip" or "memory" type on which the data concerning the subscriber, the viewed programme etc. are contained; on these cards it is then possible to record updating informations as will be specified in the following;
3) an integrated phonic system, for example realized by a memory IM_D 56 and a suitable DSP 57, for the transmission of phonic reply messages to the subscriber;
4) an Infrared RECeiver (I_REC) 58 controlled by the memory IM_I 59 which makes it possible to receive selection/reply messages from the remote control 20 and transmit them to the microcomputer 44, by means of the microcomputer 51, which recognizes them and transmits them to the receiver 18, by means of the audio/video signal processor 41.

The "Smart Cards" suitable to be read by the smart card reader 54 are for example supplied by a single service supplier, and they may contain specific data of the service itself: graphic, level of the service available per subscriber class, etc.

Here some of the applications supported by the above-mentioned Smart Card:
- Fidelity Program, which offers the possibility to who is in possession of the card, and only to him, to participate in the serial cycle of the program for which the card has been distributed with accumulated points which offer at the end the possibility to participate in a final drawing of prizes; the subscriber without card may participate in a single serial, but he has no point accumulation for all serials;
- Personal Data, a card containing the personal data of the subscriber so that each subscriber, for example one of the members of the family may interact in a "personalized" way by inserting the card;
- Tracing, a card which makes it possible to activate the tracing function (hereafter described in a more detailed way) of the actions carried out by the subscriber on groups of interactive activities (a single event, an advertising campaign, etc.), for a certain period of time;
- Fidelity buyer's which enables the fidelity subscribers to buy products from a determined Sales Centre.

It will be possible to appreciate that thanks to the existence of the above-mentioned reader 54 we will have the possibility to introduce new types of originally not foreseen interactive activities in order to avoid out-of-date phenomenons of the device. For this aim (to avoid out-of-date problems of the device) an organization system of the interactivity data also turns out to be particularly adapted such as the one described in the Italian patent application MI94A002621 in the name of the same applicant.

According to the invention the set top 30 is provided with a re-shaping module 70 which makes it possible by means of the use of suitable smart cards CARD 71 to replace some memory parts of the same decoder 30 on which reside the basic applications by other ad hoc applications and/or enables the replacement of some connected parts of the transmission devices as it will turn out clearer hereafter.

The CARD 71 is therefore inserted into the interface IC 74 and interpreted by the controller CAC 75 which replaces in the foreseen cases the basic applications contained in the decoder 30 with advanced applications contained in the same CARD 71.

In other words the set top according to the invention is shaped in a way to enable the management of some interactive events using the programmes contained in the memory PM1. For all those interactive events requiring programmes which differ from those stored in the memory PM1 the invention provides for the presence of a second memory PM2 76 allocated in the above-mentioned CARD 71.

For this aim the programme memory PM1 is connected as mentioned above to said process controller PC which is shaped in such way to identify the presence of the above-mentioned CARD 71 and, in a systematical way and/or in the foreseen cases, it is set up in a way to activate first switching means SW1 suitable to connect to the bus of the microcomputer µP1 the programme memory PM2 rather than to the programme memory PM1. In these cases obviously the microcomputer µP1 carries out the programmes inserted in the memory PM2.

It will be possible to appreciate the fact that the above-mentioned card reader 71 enables the arrangement for example of a number of CARDs 71 equal to the number of interactive events to be managed and each time the microcomputer µP1 carries out the needed prearranged programmes.

Analogously to what referred with reference to the microprocessor µP1 is also preferentially applied with reference to microcomputer µP2 which is also provided with a programme memory PM3 60 which may be inside or outside of the microprocessor itself, and which is connected to second switching means SW2.

These latter ones are controlled by the process controller PC 47 and they are connected to a fourth programme memory PM4 77 provided on said CARD 71, and in which are stored the programmes for the implementation of the data exchange towards the interactive event supplier characterized by the programmes contained in the memory PM2. In case of interactive events which imply a communication protocol with safe needs, in the memory PM4 will also be memorised chipered programmes of the communications addressed towards the supplier of said services.

The set top 30 is likewise equipped according to the invention with a module 80 of communication with the public telephone network POTS in order to link with the different service suppliers. For this reason the communication module 80 comprises a Dual Tone Multi Frequency generator DTMF_G 81 which is controlled by the above-mentioned second microcomputer µP2 through the wire µp2 and it supplies to a line interface L_INT 82 the data to be transmitted on the public telephone line POTS.

As known, a communication of the DTMF type is a communication substantially of the unidirectional type with the forwarding in a transmission direction of about 30 bit/s and the forwarding in the other transmission direction of, possibly, an acknowledgement message.

According to the invention in order to contain as much as possible the cost of the basic configuration of the set-top 30, it turns out to be possible to confer to the subscriber, the possibility to dispose of a channel of communication with the network POTS of the full-duplex type and at a speed of about 1200 bit/s, just to start off the interactive events requiring such type of communication channel.

In particular for some applications the invention foresees the allocation in said CARD of a modem device MODEM 78 which turns out to be connected to third switching means SW3 which receive on the other input the output of said DTMF_G unit. The MODEM 78 is controlled by the microcomputer 51 through the wire µp2.

The means SW3 are controlled by said process controller PC which in response to the identification of the presence of CARD 71, and preferably for predetermined applications, they provide for the connection at the input of the line interface L_INT the unit MODEM rather than said DTMF DTMF_G generator.

In other words the invention makes it possible to confer to the subscriber three different service levels:
1) The subscriber uses only the programmes included in the memory PM1 to carry out the operations foreseen by the basic configuration of the set-top 30 and uses, as communication programmes, only the programmes included in the internal memory of the microcomputer µP2, or included in said external memory PM3, and communicates therefore with the network POTS in DTMF through the unit DTMF_G.
2) The possibility of communication of the subscriber are increased by a software type support conferring to it the possibility to use the programmes included in said memory PM4 after having activated switching means SW2, and communicates with the network POTS always through said unit DTMF_G with more advanced programmes (for example chipered ones) with respect to those allocated in the memory PM3.
3) The communication possibilities of the subscriber are furthermore increased by conferring to them the possibility to use in addition to said software type support also a hardware type support set up by said MODEM unit.

The invention foresees moreover that said line interface L_INT is connected to the telephone duplex linking up with the network POTS through wire connection means, or it foresees that the unit L_INT is allocated inside of a unit TV TEL for the access to the telephone line which is preferably connected through radio frequency transmission means RTS 83 to said set-top.

According to the invention the device RTS 83 for the forwarding of signals and commands to the direct access device 10 has the form of an extractable and replaceable module. In this way different types of connections LNK between the decoder 30 and the device 10 may be supported.

For example the extractable module 83 may be set up by a radio frequency transceiver REF suitable for the use with the device TV TEL 10 of the already mentioned Italian patent application nr. MI94A 000874 in alternative the module 83 may comprise an infrared or ultrasound transceiver or one transmitting through the normal electric power network, or an interface and a cable connector when the connection is realized by means of wire.

From the above, results to be evident that the invention gives the subscriber the possibility to participate in interactive events using the basic configuration of the set top 30, or for special type interactive events the manager of the above-said events has the possibility to arrange a specific CARD 71 containing integration means for performances of the set-top in order to supply it with software and/or hardware type resources which are necessary to participate in the above-mentioned special type events.

The CARD 71 is preferably connected to the configuration module 70 making use of the mechanic according to the standard PCMCIA. The subscriber once received the above-said CARD from the operator may easily connect it to the proper set top without the need of specialized staff.

Application examples which may be supported by smart cards are those referred to home banking service which requires especially protected transmission protocols and chipered systems, which are not available in the basic configuration of the decoder 30 in order not to raise the cost too much.

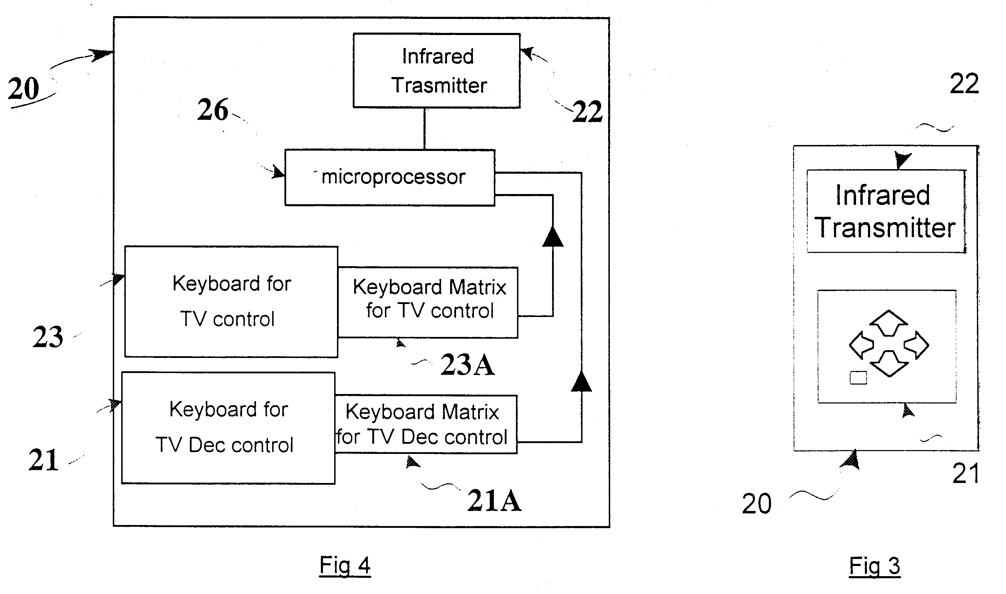

The Figures 3 and 4 show the remote control which makes the interactive type of use of a normal tv set possible. It comprises a transmitter (preferably an infrared one) 22 and a keyboard 21 with four directional buttons for the move among different interactivity windows shown on the screen and at least one button for confirmations. The moving/confirmation messages are received by the receiver 58 of the decoder 30 and transmitted to the microprocessor 44 which interprets them and transmits them then to the tv set 18 through the interface 59.

A more detailed block scheme of the remote control 20 is illustrated in figure 4 and it foresees apart from the already mentioned infrared transmitter 22 a microprocessor 26, a keyboard 23 with associated matrix 23A for the control of the television set and a keyboard 21 with associated matrix 21A for the control of the decoder 30.

The keyboard 23 is of the universal and simplified type provided with the keys for the regulation of the volume and programme change and it makes it possible to control the tv set 18 of whatever brand or type with the identification (in the known way) of the type of tv set by the remote control. The microprocessor 26 is suitable to acknowledge automatically if the command is received from the matrix 21A of the control keyboard 21 of the decoder 30, or from the matrix 23A of the tv set control keyboard 23, and therefore to communicate in alternative with the infrared receiver 58 of the decoder 30 or with that of the tv set 18.

The main performances of the decoder 30 are the following ones:
1. Visualization in overlay and menu management of the available services and of the subscriber's moves directly on the TV screen through the audio-video interface 41;
2. printing of the reply messages for the subscriber through the printer interface 52;
3. issue of phonic reply messages for the subscriber forwarded by the phonic machine 57 to the television set through the audio-video interface 41;
4. management of the relation between "Channel/Programme" under view and required "Service", i.e. management of services correlated to the programme under view by the subscriber;
5. automatic transmission of the call to the data collecting/managing processor (not shown in the figure) with the modes foreseen each time by the required service;
6. storage of the subscriber's personal data such making it possible to be identified by the Service Centre at the moment of the call;
7. visualization of the replies which the Service Centre transmits to the subscriber and in this case the decoder 30 operates as TV Tel receiver 10 or as telephone line receiver LT;
8. possibility of data storage in case where the system finds the line busy at the moment of the call;
9. upgrading of the performances of the set top by additional means of the software and/or hardware type.

The decoder 30 is preferably implemented in the configuration of a SET-TOP equipment to be connected to the TV set 18. However, without departing from the true spirit and scope of the invention it turns out to be possible to realize this decoder 30 in form of a printed circuit board or similar to be directly inserted inside the TV set 18, such to have a specific TV set suitable to enable the participation in interactive events.

Analogously the device 10 for direct access to the telephone line LT has preferably the configuration of an self-installment unit to be connected to the telephone plug BS and linked through a link LNK to the decoder 30. However, always without departing from the true spirit and scope of the invention it turns out to be possible to implement the device 10 under the form of a printed circuit board or similar to be inserted directly inside the TV set 18.

Always according to the invention the keyboard 21 for the control of the decoder 30 is allocated inside the remote control 20.

Without departing from the spirit and the scope of the invention it turns out to be possible to supply the decoder 30 (either implemented with the configuration of a SET-TOP equipment or with that of a printed circuit board inserted in the TV set) of said keyboard 21 making in this way the infrared receiver I_REC 58 unnecessary.

Although the invention has been described with particular reference to a preferred embodiment, it should be understood that the present invention is not limited thereto since other embodiments may be made by those skilled in the art without departing from the true spirit and scope thereof. It is thus contemplated that the present invention encompasses any and all such embodiments covered by the following claims.

## Claims

1. Decoder for the subscriber station in an interactive television system comprising a television station suitable to broadcast interactivity data transmitted together with the television signal, said subscriber station including:
- a subscriber television set (18);
- said decoder (30) connected to the above-mentioned TV set;
- a keyboard (21) connected to said decoder (30);
- means (10) connected to the decoder (30) for the access to a telephone line (LT),
decoder characterized in that it comprises in combination:
- a TV interface module (40) suitable to receive the above-mentioned interactivity data and to apply to the subscriber's TV set (18) signals or visualization obtained from this one;
- a peripheral interface module (50) suitable to manage a plurality of peripheral units (DSP, I_REC, Printer, CR) and to exchange data with said TV interface module (40);
- a communication module (80) suitable to exchange data with a telephone line (LT);
- a re-configuration module (70) suitable to receive a support (CARD) on which devices of the hardware and/or software type are installed;
- switching means (SW) suitable to connect to the above-mentioned modules said devices of the hardware and/or software type present on said support (CARD) suitable to be associated to said re-configuration module (70);
- a process controller (PC) suitable to reveal the carried out installation of said support (CARD) in the reshaping module (70) and to activate said switching means (SW).

2. Decoder according to claim 1, characterized in that said TV interface module includes:
- an audio-video interface (41) connected to said subscriber television set (18);
- a converter (42 o TTX Decoder) of interactivity signals contained in the video signal broadcast by said TV station, connected to said audio-video interface (41);
- a first microprocessor (44 or µP1) connected to said converter (42) and to a first programme memory (PM1);

3. Decoder according to claims 1 and 2, characterized in that said peripheral interface module (50) comprises:
- a second microprocessor (51 or µP2) connected to said first microprocessor (44 or µP1) and to a second programme memory ((PM3 or 60);
- a smart card reader suitable to interface "chip" or "memory" type cards, and suitable also to communicate with said second microprocessor (51 or µP2) by means of a respective memory (IM_C o 55).

4. Decoder according to claim 3, characterized in that it comprises also:
- a receiver for infrared signals (I_REC) suitable to receive the signals transmitted by said selection keyboard and to forward them to said second microprocessor (51 or µP2) by means of a respective memory (IM_I or 59);
- a printer connected to said second microprocessor (51 or µP2) by means of a respective memory (IM_P or 53).

5. Decoder according to claim 1, characterized in that said reconfiguration module (70) comprises a control device (CAC and IC) connected to the above-mentioned process controller (PC) and suitable to receive said support (CARD) containing a third programme memory (PM2).

6. Decoder according to claims 1 and 5, characterized in that said switching means comprise a first switch (SW1) suitable to connect to said first microprocessor (µP1 or 44) said first programme memory (PM1) or said third programme memory (PM2).

7. Decoder according to claims 3, 4 and 5, characterized in that said support (CARD) comprises a fourth programme memory (PM4) and said switching means comprise a second switch (SW2) suitable to connect to said second microprocessor (µP2 or 51) said second programme memory (PM3) or said fourth programme memory (PM4).

8. Decoder according to claim 1, characterized in that said communication module (80) comprises a DTMF signal generator (DTMF_G or 81) which is connected to a line interface (L_INT or 82) at its turn connected to the telephone line (LT) through wire means.

9. Decoder according to claims 1, 5 and 8, characterized in that said support (CARD) comprises also a modem unit (MODEM or 78) and said switching means comprise a third switch (SW3) suitable to connect to said line interface (L_INT) the output of said DTMF signal generator (DTMF_G) or the output of said modem unit (MODEM).

10. Decoder according to claim 8, characterized in that said line interface (L_INT) is allocated in said means (10) for the access to the telephone line and said communication module as well as said means (10) for the access to the telephone line comprise also transceiver means (RTS or 83).

11. Decoder according to claim 10, characterized in that said transceiver means (83) have the form of an extractable and replaceable module in relation to the pre-selected communication mode (radio frequency, infrared, ultrasound, or by means of the normal electrical power network).

12. Decoder according to the previous claims, characterized in that said support (CARD) will be associated to the decoder using the mechanic solutions according to the standard PCMCIA.

13. Decoder according to the previous claims, characterized in that it is incorporated in said TV receiver (18).
